# EUROPEAN PATENT SPECIFICATION

(11) **EP 1 266 279 B1**
(45) Date of publication and mention of the grant of the patent: **31.05.2006**
(21) Application number: 00909585.2
(22) Date of filing: 17.03.2000
(51) Int. Cl.: G06F 3/033

(54) **METHOD AND SYSTEM FOR CHOOSING AN ITEM OUT OF A LIST APPEARING ON A SCREEN**
VERFAHREN UND SYSTEM ZUR AUSWAHL EINES GEGENSTANDES AUS EINER AUF EINEM BILDSCHIRM ERSCHEINENDEN LISTE
PROCEDE ET SYSTEME DE SELECTION D'UN ARTICLE DANS UNE LISTE D'ARTICLES APPARAISSANT SUR UN ECRAN

(43) Date of publication of application: 18.12.2002
(73) Proprietor: OpenTV, Inc., San Francisco, CA 94111-3810 (US)
(72) Inventor: DELPUCH, Alain, F-78690 Les-Essarts-le-Roi (FR)
(74) Representative: Freeman, Jacqueline Carol
(86) International application number: PCT/IB2000/000351
(87) International publication number: WO 2001/069369

(56) References cited:
- EP-A- 0 707 258
- EP-A- 0 762 264
- EP-A- 0 813 138
- WO-A-99/57630
- PATENT ABSTRACTS OF JAPAN vol. 2000, no. 02, 29 February 2000 (2000-02-29) & JP 11 312038 A (CANON INC), 9 November 1999 (1999-11-09)

## Description

The present invention relates to a method for choosing an item by a user out of a list of items appearing on a screen display, wherein the user scrolls through said list by moving a cursor along said list, the cursor designating a focused item and moving automatically from said focused item to a following one at an auto-repeat rate defining an auto-repeat period, if an action on a next item key is maintained by the user.

The invention also relates to a corresponding system.

In a computer or television environment, one problem is to let the user choose quickly or easily an item out of a very long list.

In the past pointing devices have been used, such as a mouse or keys on a remote control device.

In order to optimise the pointing, hierarchical properties have been developed with the list, such as organisation of the list as a tree.

Branches of the tree can be expanded or collapsed and navigation is achieved using the click button of a mouse or an arrow key of a keyboard.

However such systems have drawbacks.

Part of the trouble is coming from the fact that tree's structure, while very powerful, are also quite complex and not adapted to mass market. Also, pointing devices like mice are not available in context like television or telephone, where commonly used pointing involve several function keys.

Furthermore, in the prior art, when an auto-repeat is provided, it happens at a constant rate, for instance comprised between 0.1 and 0.5 second.

Such time period is however either too short and does not bar from the risk of missing the searched item, or too long and renders the search fastidious.

To try to solve this problem, some user interfaces provide an acceleration of the auto-respect rate with time.

However, the problem with such solution is to balance speeds and usability. When it starts going too fast the user cannot stop at the right time.

In JP 11 312038 A a system is described in which the speed of scroll is decelerated near data which is most likely to be required by a user, by storing data importance information in a separate storage facility.

In WO 9957630 data is scrolled through in increments of varying size.

The present invention aims to solve the drawbacks and disadvantages of the known solutions.

For this purpose, it is an object of the present invention to provide a method and a system which render possible an acceleration of the user interface to select quickly an item among a large list of items, without risking to miss the searched item, and this without adding new keys or a complex new concept, like tree's architecture.

It is another object of the present invention to provide easy navigation along a long list of items, allowing a quick selection while using the known and already existing remote devices, for instance remote devices used for selecting programs on a TV screen. Another object of the invention is to provide a flat list of items to the viewer of a PC display screen, who is then authorised to select one item by using the arrow keys of a key board to navigate through the list, said list being for instance only displayed portion by portion, while an auto-repeat key is maintained pressed to move rapidly through the list.

It is another object of the invention to provide a time saving and improved method and system for quick selection of items.

More precisely, in one aspect the invention proposes a method of choosing an item by a user out of a long list of items appearing on a screen displaying said list, wherein the user scrolls through said list by moving a cursor along said list, said cursor designating a focused item and moving automatically from said focused item to a following one at an auto-repeat rate defining an auto-repeat period, if an action on a next item key by the user is maintained, characterised in that the auto-repeat rate is periodically slowed down on predetermined items, termed sticky items, in order to give additional time to the user to absorb visual feed back on said sticky items; and each item is pointed out during a predetermined period of time, termed the latency period, different from the auto-repeat period; wherein the list is organised in a plurality of levels of items, comprising sticky items of a first level, second level, ... xth level, the slow down of the auto-repeat rate while reaching the relevant sticky items decreasing with the increase of the level in the list; characterised in that said levels represent different levels within a hierarchy, with the first level being the most general level in the hierarchy.

In another aspect the invention provides an electronic data processing system for choosing an item by a user out of a long list of items appearing on a screen displaying said list, wherein said system comprises:
scrolling means for scrolling through said list including a cursor arranged to be moved along said list, highlighting means for highlighting a focused item pointed by said cursor, automatic moving means for automatically moving said cursor from said focused item to a following one at an auto-repeat rate defining an auto-repeat, and maintaining means for maintaining the scrolling by the user, characterised in that it further includes slowing means for slowing down the auto-repat rate periodically on predetermined items, termed sticky items, in order to give additional time to the user to absorb visual feedback on said sticky items, wherein in that said highlighting means comprises timing means to highlight any first item on which it is focalised with the cursor, during a predetermined period of time, termed the latency period, different from the auto-repeat period; wherein the list has a plurality of levels of items, comprising sticky items of a first level, second level, ... xth level, and the system further comprises slowing means to slow down the auto-repeat rate while reaching the relevant sticky items, said slowing down decreasing with the increase of the level in the list; characterised in that said levels represent different levels within a hierarchy, with the first level being the most general level in the hierarchy.

By focused item one should understand for instance an highlighted item.

Therefore one main feature of the invention resides in the control of the auto-repeat which periodically slows down on predetermined items and then speeds up while maintaining the next item key pressed continuously.

In other words, the idea is here to stop/pause the auto-repeat as it reaches relevant items of the list, termed the sticky items without releasing the action on the next item key.

This allows to move much faster than standard user interface, on less relevant items, i.e. five times to twenty times faster, i.e. for instance with an auto-repeat period as short as 0.01s, and then to come back to a latency period of time of for instance 0.5s on the relevant items. This greatly decreases the risk to over pass the searched item.

The present invention also proposes advantageous embodiments including one and/or a plurality of the following features:
- when it is first focalised on an item with the cursor, said item is pointed out during a predetermined period of time, termed the latency period, different from the auto-repeat period.

In other words, when the cursor is moved to an item by pressing the next item key for the first time after a previous release, the latency period is experimented, then if pressure is maintained the auto-repeat period is implemented.
- the cursor being moved by a next item key, the method comprises the steps of :
   1 - checking if said next item key is pressed by the user,
   2 - if next item key is pressed, arming a timer with the latency period,
   3 - focusing on next item,
   4 - checking if next item key is released,
   5 - if next item key is not released, checking if said timer has expired,
   6 - if said timer has expired, checking if the current item is sticky,
   7 - if yes, arming the timer with a slow down period before focusing on the next item, and if not, arming the timer with the auto-repeat period before focusing on the next item, and
   8 - repeating steps 3 to 7, until next item key is released, an action key on the current or selected focused item being eventually pressed ;
- the auto-repeat rate is accelerating with time, before slowing down on sticky items ;
- the list is organised in a plurality of levels of items, comprising sticky items of first level, second level, ... xth level, the slow down of the auto-repeat rate while reaching the relevant sticky items decreasing with the increase of the level in the list ;

The first level is the most general one, appearing at first, for instance the country, then the more precise you become (department, town...) the slower you are.
- the auto-repeat period is comprised between 0.02s and 0.1 s, and advantageously of the order of 0.05s ;
- the latency period is comprised between 0.4s and 1s ;
- the auto-repeat rate is slowed down to of the order of 0.4s to 0.6s when reaching a sticky item.

The invention also provides a data processing system for choosing an item by a user out of a long list of items appearing on a screen display, wherein said system comprises
- scrolling means for scrolling through said list including a cursor arranged to be moved along said list,
- highlighting means for highlighting a focused item pointed by said cursor,
- automatic moving means for automatically moving said cursor from said focused item to a following one at an auto-repeat rate defining an auto-repeat period, and
- maintaining means for maintaining the scrolling by the user, characterised in that
it further includes slowing means for slowing down the auto-repeat rate periodically on predetermined items, termed sticky items, in order to give additional time to the user to absorb visual feedback on said sticky items.

By highlighting an item, one should here understand designating or pointing an item, and not obligatorily changing the colour or the contrast of its immediate environment with regard to the general background of the screen display.

Advantageously the system comprises highlighting means with timing means to highlight an item on which it is focalised for the first time with a cursor, during a predetermined period of time termed the latency period, different from the auto-repeat period.

In another advantageous embodiment the system comprises:
- first checking means to check if said next item key is pressed by the user,
- first timing means, arranged to arm a timer if next item key is pressed, with the latency period,
- focusing means to focus on next item,
- second checking means to check if next item key is released,
- third checking means to check if said latency period has expired, if next item key is not released,
- fourth checking means to check if the current item is sticky, if said latency period has expired,
- second timing means arranged to arm a timer with a slow down period before focusing on the next item if said current item is sticky, and if not, arranged to arm the auto-repeat period before focusing on the next item,
- and an action key to select the current focused item if decided.

By focusing means one should understand pointing means or highlighting means or equivalent.

Advantageously and more generally the system includes the needed means for providing the steps here above mentioned concerning the method.

The invention will be better understood from reading the following description of the particular embodiment given by way of non limiting example, and which refers to the accompanying drawings in which :
Figure 1 shows a schematic diagram figuring a data processing system according to an embodiment of the invention, displaying a computer list.
Figure 2 shows a diagram featuring the main steps of an embodiment of the method according to the invention.

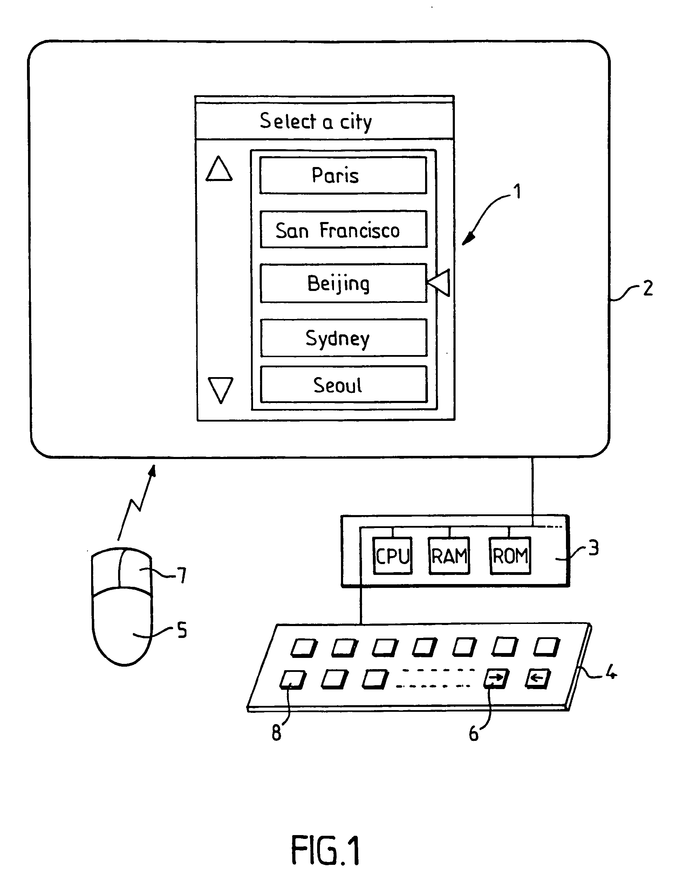

Figure 1 shows a data processing system displaying a computer list 1.

The system comprises a screen display 2, connected to a computer 3 (for instance of the PC type) having a keyboard 4 and a mouse 5.

In this example the user has to select a city among one hundred, only five cities being displayed at a time.

The user has to scroll by pressing on a next item key 6 of the key board or on the click 7 of the mouse, through the all list, to find the city he or she wants to select. Then by double clicking or by using an action or selecting key 8 he or she enters the file of the searched item.

In the present example, the item is selected through criteria that matches user expectation, for example alphabetical order. Then auto-repeat to scroll according to the invention is provided.

In the prior art and typically, auto-repeat maximum rate is set around a tenth of a second to give the user time to analyse the visual feedback which renders fastidious searches among long list, a drawback avoided with the invention.

The list scanned according to the invention is of course not limited to the provided example. It could be for instance a list of TV channels grouped by themes. The program +/program - key of the remote control device is here used to change channel quickly, the auto-repeat slowing down as a new theme is reached.

Another example could be for instance with teletext pages numbered from 100 to 999.

Hundred generally group magazines (100s are generally news, 200s. sport, 300s are entertainment, etc.).

Using the invention, a pair of keys could be pressed to quickly increment / decrement page number, and pause longer as it reaches a new hundred range.

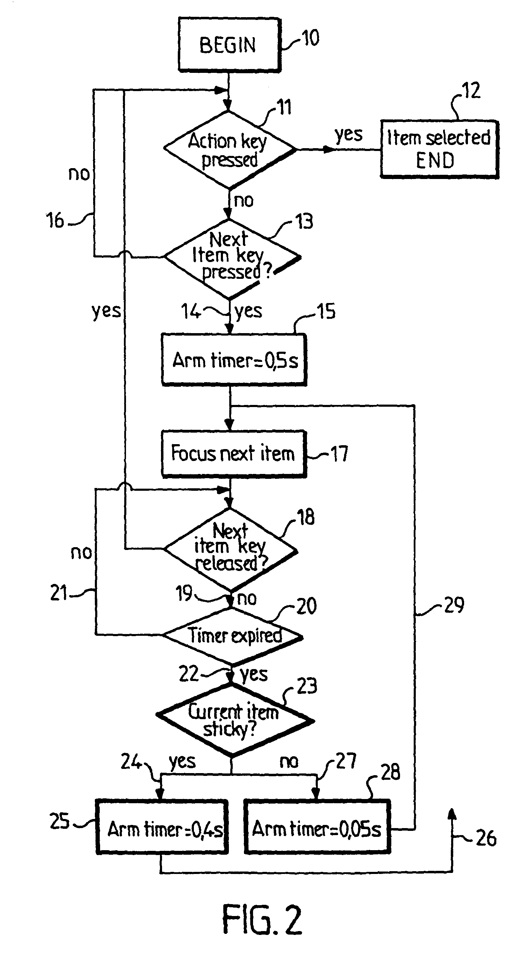

To implement the invention, the CPU and the ROM and RAM memories of the computer 3 or of the equivalent features in a TV set for instance, are programmed in a manner known per se by the man skilled in the art, in order to provide the steps of the method which is now described in reference to the diagram of figure 2.

The system being started in 10, a first test 11 checking if an action or selecting key 8 is pressed, is provided.

If yes, the item is selected in 12, and the search ends.

If not, the cursor being arranged to be moved by the user when pressing on a next item key, in the embodiment of the present invention more particularly described here, the method then comprises the steps of :
- checking (test 13) if said next item key is pressed by the user,
- if next item key is pressed (14), arming a timer with the latency period, for instance of 0.5s (step 15),
- if the next item key is not pressed (16) coming back to test 11,
- focusing (step 17) on next item,
- checking (step 18) if next item key is released,
- if next item key is not released (line 19), checking in 20 if the current period provided by the timer has expired. The period could be the latency period, the auto-repeat period or the slowed down period on the sticky item,
- otherwise coming back (line 21) to test 11,
- if said period has expired (line 22), checking in 23 if the current item is sticky,
- if yes (line 24), arming a timer in 25 with a slow down period (for instance 0.4s) before going (line 26) for focusing on the next item (step 17), and
- if not, arming in 28 the auto-repeat period before coming back (line 29) for focusing on the next item (step 17), and
- repeating the relevant previous steps from step 17 to step 27, until next item key is released, an action key on the current focused item being then eventually pressed.

The functioning of the system will now be more particularly described taking the example of a list of city names sorted alphabetically on a computer screen display and in reference to figure 1.

Twenty six (A to Z) sticky items are retained, one for each letter of the alphabet.

After turning on the PC, the user will display the beginning of the list.

The screen display being not large enough to display the list entirely, such list will appear as a scrolling menu in a manner known per se, portion by portion.

The user will then point out with an arrow key on the name of a first item on the list then shall keep the next item key pressed with his finger.

The pointer goes very quickly from one letter to the other.

In the example involving a decreasing auto-repeat period down to 0.05 second, the auto-repeat allows therefore less than is to go from one letter to the other, where it is slowed down (each first city with a new initial being a sticky item).

More particularly, as the focus reaches a new letter, it slows down for example to 0.5 second, which gives the user time to absorb visual feedback.

Then when arrived ,at the right part of the list proposed he or she will proceed step by step to slowly reach the searched item, by pressing / depressing the next item key, therefore selecting each time the latency period for the timer (step 15), allowing him or her to do not overpass the relevant item which can then be entered by pressing the action key.

With the present invention, the stopping / pausing techniques allows to use accelerating auto-repeat period, the pausing period giving a time to the viewer to see or reach the selection.

Additional advantages and modifications will readily occur to those skilled in the art. Therefore the present invention in its broader aspects is not limited to the specific details, representative device and illustrated examples shown and described herein.

For instance, although the main usage will certainly be using two level lists, the invention can be generalised with n-level lists.

The idea would be here to pause when the selection moves one level up.

I.e. in a highly hierarchical set of items, like a large file system, huge database of cities, etc., sticky items will be provided at different levels, the higher the level, the biggest the slow down will be, as the sticky item is reached.

In the cases of world wide city database, the different levels could be continent, countries, states, regions, and then the cities themselves, sorted by alphabetical orders.

## Claims

1. A method of choosing an item by a user out of a long list (1) of items appearing on a screen (2) displaying said list, wherein the user scrolls through said list by moving a cursor along said list, said cursor designating a focused item and moving automatically from said focused item to a following one at an auto-repeat rate defining an auto-repeat period, if an action on a next item key (6, 7) by the user is maintained, wherein the auto-repeat rate is periodically slowed down on predetermined items, termed sticky items, in order to give additional time to the user to absorb visual feed back on said sticky items; and each item is pointed out during a predetermined period of time, termed the latency period, different from the auto-repeat period; wherein the list is organised in a plurality of levels of items, comprising sticky items of a first level, ... xth level, the slow down of the auto-repeat rate while reaching the relevant sticky items decreasing with the increase of the level in the list; **characterised in that** said levels represent different levels within a hierarchy, with the first level being the most general level in the hierarchy.

2. A method according to claim 1, wherein the cursor is moved by a next item key (6, 7), **characterised in that** said method comprises the steps of:
- checking (13) if said next item key is pressed by the user,
- if next item key is pressed, arming (15) a timer with the latency period,
- focusing (17) on next item,
- checking (18) if next item key is released,
- if next item key is not released, checking (20) if said timer has expired,
- if said timer has expired, checking (23) if the current item is sticky,
- if yes, arming (25) the timer with a slow down period before focusing on the next item, and if not arming (28) the timer with the auto-repeat period before focusing on the next item, and
- repeating steps 3 to 7, until next item key is 10 released, an action key on the current focused item being eventually pressed (12).

3. A method according to any of the preceding claims, **characterised in** the auto-repeat rate is accelerating with time, before slowing down on sticky items.

4. A method according to any of the preceding claims, **characterised in that** the auto-repeat period is comprised between 0.02 and 0.1 s.

5. A method according to any of the preceding claims **characterised in that** the latency period is comprised between 0.4 and 1 s.

6. A method according to any of the preceding claims, **characterised in that** the auto-repeat rate is slowed down to of the order of 0.4 to 0.6 s.

7. An electronic data processing system for choosing an item by a user out of a long list (1) of items appearing on a screen (2) displaying said list, wherein said system comprises
- scrolling means (3) for scrolling through said list including a cursor arranged to be moved along said list,
- highlighting means for highlighting means a focused item pointed by said cursor,
- automatic moving means (3) for automatically moving said cursor from said focused item to a following one at an auto-repeat rate defining an auto-repeat period, and
- maintaining means (6, 7, 3) for maintaining the scrolling by the user, **characterised in that** it further includes slowing means (3) for slowing down the auto-repeat rate periodically on predetermined items, termed sticky items, in order to give additional time to the user to absorb visual feedback on said sticky items, wherein **in that** said highlighting means comprises timing means to highlight any first item on which it is focalised with the cursor, during a predetermined period of time, termed the latency period, different from the auto-repeat period;
- wherein the list has a plurality of levels of items, comprising sticky items of a first level, second level, ... xth level, and the system further comprises slowing means to slow down the auto-repeat rate while reaching the relevant sticky items, said slowing down decreasing with the increase of the level in the list; **characterised in that** said levels represent different levels within a hierarchy, with the first level being the most general level in the hierarchy.

8. A system according to claim 7, **characterised in that** it comprises:
- first checking means to check (13) if said next item key is pressed by the user,
- first timing means arming (15) a timer if next item key is pressed, with the latency period,
- focusing means to focus (17) on next item,
- second checking means to check (18) if next item key is released,
- third checking means to check (2) if said timber has expired, if next item key is not released,
- fourth checking means to check (23) if the current item is stick, if said timber has expired,
- second timing means to arm (25) the timber with a slow down period before focusing on the next item if said current item is sticky, and if not arming (28) the timber with the auto-repeat period before focusing on the next item,
- and an action key (8) to select the current focused 20 item if decided.

9. A system according to any of claims 3 to 7, **characterised in that** it comprises accelerating means to accelerate the auto-repeat rate with time, before slowing down on sticky items.

10. A system according to any of claims 7 to 9, **characterised in that** the auto-repeat period is comprised between 0.02 and 0.1s.

## Patentansprüche

1. Verfahren zum Auswählen eines Gegenstandes durch einen Benutzer aus einer langen Liste (1) von Gegenständen, die auf einem die genannte Liste anzeigenden Bildschirm (2) erscheinen, wobei der Benutzer die genannte Liste durch Bewegen eines Cursors entlang der genannten Liste durchläuft, wobei der genannte Cursor einen fokussierten Gegenstand designiert und von dem genannten fokussierten Gegenstand mit einer Auto-Repeat-Rate, die eine Auto-Repeat-Periode definiert, automatisch zu einem folgenden Gegenstand geht, wenn der Benutzer eine Nächster-Gegenstand-Taste (6, 7) gedrückt hält, wobei die Auto-Repeat-Rate auf vorbestimmten Gegenständen, "klebrige" Gegenstände genannt, periodisch verringert wird, um dem Benutzer zusätzliche Zeit zu geben, visuelles Feedback auf den genannten klebrigen Gegenständen zu absorbieren, und auf jeden Gegenstand während einer vorbestimmten Zeitperiode gezeigt wird, Latenzperiode genannt, die sich von der Auto-Repeat-Periode unterscheidet, wobei die Liste in eine Mehrzahl von Gegenstandsebenen organisiert ist, die klebrige Gegenstände einer ersten Ebene, ... x-ten Ebene umfasst, wobei die Verringerung der Auto-Repeat-Rate beim Erreichen der jeweiligen klebrigen Gegenstände mit zunehmender Ebene in der Liste abnimmt; **dadurch gekennzeichnet, dass** die genannten Ebenen unterschiedliche Ebenen innerhalb einer Hierarchie repräsentieren, wobei die erste Ebene die allgemeinste Ebene in der Hierarchie ist.

2. Verfahren nach Anspruch 1, wobei der Cursor durch eine Nächster-Gegenstand-Taste (6, 7) bewegt wird, **dadurch gekennzeichnet, dass** das genannte Verfahren die folgenden Schritte umfasst:
- Prüfen (13), ob die genannte Nächster-Gegenstand-Taste vom Benutzer gedrückt wird,
- wenn die Nächster-Gegenstand-Taste gedrückt wird, Aktivieren (15) einer Zeituhr mit der Latenzperiode,
- Fokussieren (17) des nächsten Gegenstandes,
- Prüfen (18), ob die Nächster-Gegenstand-Taste losgelassen wurde,
- wenn die Nächster-Gegenstand-Taste nicht losgelassen wurden, Prüfen (20), ob die genannte Zeituhr abgelaufen ist,
- wenn die genannte Zeituhr abgelaufen ist, Prüfen (23), ob der aktuelle Gegenstand klebrig ist,
- wenn ja, Aktivieren (25) der Zeituhr mit einer Verlangsamungsperiode vor dem Fokussieren des nächsten Gegenstandes, und wenn nicht, Aktivieren (28) der Zeituhr mit der Auto-Repeat-Periode vor dem Fokussieren des nächsten Gegenstandes, und
- Wiederholen der Schritte 3 bis 7, bis die Nächster-Gegenstand-Taste 10 losgelassen wird, wobei schließlich eine Aktionstaste auf dem aktuellen fokussierten Gegenstand gedrückt wird (12).

3. Verfahren nach einem der vorherigen Ansprüche, **dadurch gekennzeichnet, dass** die Auto-Repeat-Rate mit der Zeit zunimmt, bevor sie auf klebrigen Gegenständen abnimmt.

4. Verfahren nach einem der vorherigen Ansprüche, **dadurch gekennzeichnet, dass** die Auto-Repeat-Periode zwischen 0,02 und 0,1 Sekunden liegt.

5. Verfahren nach einem der vorherigen Ansprüche, **dadurch gekennzeichnet, dass** die Latenzperiode zwischen 0,4 und 1 Sekunde liegt.

6. Verfahren nach einem der vorherigen Ansprüche, **dadurch gekennzeichnet, dass** die Auto-Repeat-Rate auf einen Wert von etwa 0,4 bis 0,6 Sekunden verringert wird.

7. Elektronisches Datenverarbeitungssystem zum Wählen eines Gegenstandes durch einen Benutzer aus einer langen Liste (1) von Gegenständen, die auf einem die genannte Liste anzeigenden Bildschirm (2) erscheinen, wobei das genannte System Folgendes umfasst:
- Bildrollmittel (3) zum Durchlaufen der genannten Liste mit einem Cursor zum Bewegen entlang der genannten Liste,
- Hervorhebungsmittel zum Hervorheben eines fokussierten Gegenstandes, auf den der genannte Cursor zeigt,
- automatisches Bewegungsmittel (3) zum automatischen Bewegen des Cursors von dem genannten fokussierten Gegenstand zu einem folgenden mit einer Auto-Repeat-Rate, die eine Auto-Repeat-Periode definiert, und
- Haltemittel (6, 7, 3) zum Halten des Bildrollens durch den Benutzer, **dadurch gekennzeichnet, dass** es ferner ein Verlangsamungsmittel (3) zum periodischen Verringern der Auto-Repeat-Rate auf vorbestimmten Gegenständen beinhaltet, "klebrige" Gegenstände genannt, um dem Benutzer zusätzliche Zeit zu geben, visuelles Feedback auf den genannten klebrigen Gegenständen zu absorbieren, wobei das genannte Hervorhebungsmittel Zeitsteuermittel zum Hervorheben eines beliebigen ersten Gegenstands umfasst, auf dem es mit dem Cursor während einer vorbestimmten Zeitperiode, Latenzperiode genannt, die sich von der Auto-Repeat-Periode unterscheidet, fokussiert ist;
- wobei die Liste eine Mehrzahl von Gegenstandsebenen hat, die klebrige Gegenstände einer ersten Ebene, zweiten Ebene,... x-ten Ebene umfasst, und wobei das System ferner ein Verlangsamungsmittel zum Verringern der Auto-Repeat-Rate umfasst, während die relevanten klebrigen Gegenstände erreicht werden, wobei die genannte Verringerung mit zunehmender Ebene in der Liste abnimmt; **dadurch gekennzeichnet, dass** die genannten Ebenen unterschiedliche Ebenen in einer Hierarchie repräsentieren, wobei die erste Ebene die allgemeinste Ebene in der Hierarchie ist.

8. System nach Anspruch 7, **dadurch gekennzeichnet, dass** es Folgendes umfasst:
- ein erstes Prüfmittel zum Prüfen (13), ob die genannte Nächster-Gegenstand-Taste vom Benutzer gedrückt wird,
- ein erstes Zeitsteuermittel, das eine Zeituhr aktiviert (15), wenn die Nächster-Gegenstand-Taste betätigt wird, mit der Latenzperiode,
- Fokussiermittel zum Fokussieren (17) auf dem nächsten Gegenstand,
- ein zweites Prüfmittel zum Prüfen (18), ob die Nächster-Gegenstand-Taste losgelassen wurde,
- ein drittes Prüfmittel zum Prüfen (2), ob die genannte Zeituhr abgelaufen ist, wenn die Nächster-Gegenstand-Taste nicht losgelassen wurde,
- ein viertes Prüfmittel Prüfen (23), ob der aktuelle Gegenstand klebt, wenn die genannte Zeituhr abgelaufen ist,
- ein zweites Zeitsteuermittel, um die Zeituhr mit einer Verlangsamungsperiode zu aktivieren (25), bevor auf dem nächsten Gegenstand fokussiert wird, wenn der genannte aktuelle Gegenstand klebrig ist, und wenn nicht, Aktivieren (28) der Zeituhr mit der Auto-Repeat-Periode vor dem Fokussieren auf dem nächsten Gegenstand,
- und eine Aktionstaste (8) zum Wählen des aktuellen fokussierten Gegenstandes (20), wenn dies beschlossen wird.

9. System nach einem der Ansprüche 3 bis 7, **dadurch gekennzeichnet, dass** es Beschleunigungsmittel zum Beschleunigen der Auto-Repeat-Rate mit der Zeit umfasst, bevor auf klebrigen Gegenständen verlangsamt wird.

10. System nach einem der Ansprüche 7 bis 9, **dadurch gekennzeichnet, dass** die Auto-Repeat-Periode in einem Bereich zwischen 0,02 und 0,1 Sekunden liegt.

## Revendications

1. Un procédé de sélection d'un élément par un utilisateur dans une longue liste (1) d'éléments apparaissant sur un écran (2) affichant ladite liste, où l'utilisateur fait défiler ladite liste en déplaçant un curseur le long de ladite liste, ledit curseur désignant un élément désigné et se déplaçant automatiquement dudit élément désigné vers l'élément suivant à une cadence de répétition automatique définissant une période de répétition automatique, si une action sur une touche élément suivant (6, 7) est maintenue par l'utilisateur, où la cadence de répétition automatique est périodiquement diminuée sur des éléments prédéterminées, appelés éléments rémanents, afin de laisser à l'utilisateur un délai additionnel pour absorber des informations visuelles en retour relatives auxdits éléments rémanents ; et chaque élément est signalé pendant une période de temps prédéterminée, appelé période d'attente, différente de la période de répétition automatique; où la liste est organisée selon une pluralité de niveaux d'éléments, comprenant des éléments rémanents d'un premier niveau, ..., x^{ème} niveau, le ralentissement de la cadence de répétition automatique au moment d'atteindre les éléments rémanents pertinents diminuant avec l'augmentation du niveau dans la liste; **caractérisé par le fait que** lesdits niveaux représentent des niveaux différents dans une hiérarchie, le premier niveau étant le niveau le plus général de la hiérarchie.

2. Un procédé selon la Revendication 1, où le curseur est déplacé par une touche élément suivant (6, 7), **caractérisé par le fait que** ledit procédé comprend les opérations suivantes :
- vérification (13) que ladite touche élément suivant est enfoncée par l'utilisateur,
- si la touche élément suivant est enfoncée, armement (15) d'un chronomètre avec la période d'attente,
- désignation (17) de l'élément suivant,
- vérification (18) que la touche élément suivant est relâchée,
- si la touche élément suivant n'est pas relâchée, vérifier (20) si ledit chronomètre a expiré,
- si ledit chronomètre a expiré, vérifier (23) si ledit élément courant est rémanent,
- si oui, armement (25) du chronomètre avec une période de ralentissement avant la désignation de l'élément suivant, et si non, armement (28) du chronomètre avec la période de répétition automatique avant la désignation de l'élément suivant, et
- répétition des opérations 3 à 7 jusqu'à ce que la touche élément suivant 10 soit relâchée, une touche de commande sur l'élément actuellement désigné étant éventuellement enfoncée (12).

3. Un procédé selon l'une quelconque des Revendications précédentes, **caractérisé par le fait que** la cadence de répétition automatique augmente avec le temps avant de diminuer sur les éléments rémanents.

4. Un procédé selon l'une quelconque des Revendications précédentes, **caractérisé par le fait que** la période de répétition automatique se situe entre 0,02 et 0,1 s.

5. Un procédé selon l'une quelconque des Revendications précédentes, **caractérisé par le fait que** la période d'attente se situe entre 0,4 et 1 s.

6. Un procédé selon l'une quelconque des Revendications précédentes, **caractérisé par le fait que** la cadence de répétition automatique est réduite à une cadence de l'ordre de 0,4 à 0,6 s.

7. Un système de traitement de données électronique de sélection d'un élément par un utilisateur dans une longue liste (1) d'éléments apparaissant sur un écran (2) affichant ladite liste, où ledit système comprend :
- un moyen de défilement (3) pour faire défiler ladite liste comprenant un curseur agencé de façon à pouvoir être déplacé le long de ladite liste,
- un moyen de mise en évidence pour mettre en évidence un élément désigné indiqué par ledit curseur,
- un moyen de déplacement automatique (3) pour déplacer automatiquement ledit curseur dudit élément désigné vers un élément suivant à une cadence de répétition automatique définissant une période de répétition automatique, et
- un moyen de maintien (6, 7, 3) pour maintenir le défilement par l'utilisateur, **caractérisé par le fait qu'**il comprend en outre un moyen de ralentissement (3) pour réduire périodiquement la cadence de répétition automatique sur des éléments prédéterminés, appelés éléments rémanents, afin de laisser à l'utilisateur un délai additionnel pour absorber des informations visuelles en retour relatives auxdits éléments rémanents, où ledit moyen de mise en évidence comprend un moyen de chronométrage pour mettre en évidence tout premier qu'il désigne avec le curseur, pendant une période de temps prédéterminée, appelée période d'attente, différente de la période de répétition automatique ;
- où la liste possède une pluralité de niveaux d'éléments, comprenant des éléments rémanents d'un premier niveau, d'un deuxième niveau, ... d'un x^{ème} niveau, et où le système comprend en outre un moyen de ralentissement pour réduire la cadence de répétition automatique en cas d'atteinte des éléments rémanents pertinents, ledit ralentissement diminuant avec l'augmentation de niveau dans la liste ; **caractérisé par le fait que** lesdits niveaux représentent différents niveaux dans une hiérarchie, le premier niveau étant le niveau le plus général de la hiérarchie.

8. Un système selon la Revendication 7, **caractérisé par le fait qu'**il comprend :
- un premier moyen de vérification pour vérifier (13) si ladite touche élément suivant a été enfoncée par l'utilisateur,
- un premier moyen de chronométrage pour armer (15) un chronomètre avec la période d' attente si la touche élément suivant a été enfoncée,
- un moyen de désignation pour désigner (17) l'élément suivant,
- un deuxième moyen de vérification pour vérifier (18) si ladite touche élément suivant a été relâchée,
- un troisième moyen de vérification pour vérifier (2) si ledit chronomètre a expiré si la touche élément suivant n'a pas été relâchée,
- un quatrième moyen de vérification pour vérifier (23) si l'élément actuel est rémanent, si ledit chronomètre a expiré,
- un deuxième moyen de chronométrage pour armer (25) le chronomètre avec une période de ralentissement avant de désigner l'élément suivant si ledit élément actuel est rémanent, et, dans le cas contraire, pour armer (28) le chronomètre avec la période de répétition automatique avant de désigner l'élément suivant,
- et une touche de commande (8) pour sélectionner l'élément actuellement désigné 20 si souhaité.

9. Un système selon l'une quelconque des Revendications 3 à 7, **caractérisé par le fait qu'**il comprend un moyen d'accélération pour augmenter la cadence de répétition automatique avec le temps avant de la diminuer sur des éléments rémanents.

10. Un système selon l'une quelconque des Revendications 7 à 9, **caractérisé par le fait que** la période de répétition automatique se situe entre 0,02 et 0,1 s.
